Europäisches Patentamt

European Patent Office

Office européen des brevets

(19)

(11) Veröffentlichungsnummer: **0 203 534**
**A1**

## (12) EUROPÄISCHE PATENTANMELDUNG

(21) Anmeldenummer: 86106977.1

(22) Anmeldetag: 22.05.86

(51) Int. Cl.⁴: **B41J 3/04** , H04N 1/40

(30) Priorität: 29.05.85 DE 3519243

(43) Veröffentlichungstag der Anmeldung:
03.12.86 Patentblatt 86/49

(84) Benannte Vertragsstaaten:
CH DE FR GB IT LI NL SE

(71) Anmelder: **Siemens Aktiengesellschaft Berlin
und München
Wittelsbacherplatz 2
D-8000 München 2(DE)**

(72) Erfinder: **Kattner, Erich, Dipl.-Ing. (FH)
Kiem-Pauli-Weg 39
D-8014 Neubiberg(DE)**
Erfinder: **Lichti, Reiner, Dipl.-Ing. (FH)
Kerschensteinerstrasse 228
D-8034 Germering(DE)**

(54) Tintenschreibeinrichtung zur Erzeugung von Tintentröpfchen unterschiedlicher Grösse.

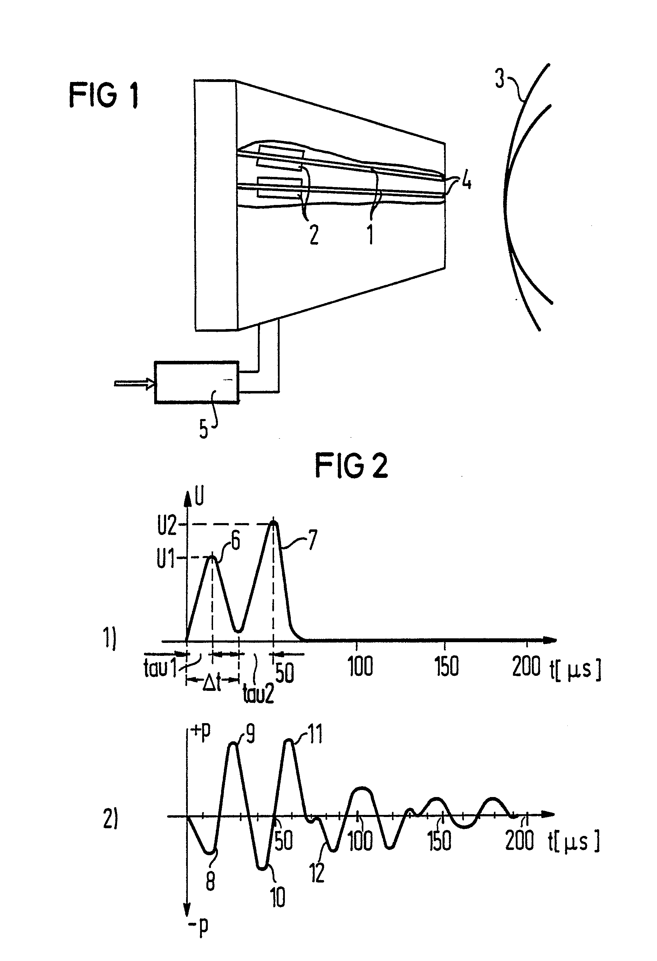

(57) Zur Erzeugung von Tintentröpfchen unterschiedlicher Größe werden die piezoelelktrischen Wandlerelemente, die jeweils den Tintenkanälen eines Schreibkopfes zugeordnet sind mit einer einstellbaren Anzahl von Ansteuerimpulsen (6, 7) angesteuert, deren Folgefrequenz auf die Resonanzfrequenz des Tintenkanals abgestimmt ist und die zeitlich derart aufeinanderfolgen, daß ein durch nachfolgende Ansteuerimpulse (7) bewirkter Ausstoß einer kleinen Tintenmenge aus der Austrittsöffnung eines Tintenkanals jeweils noch vor der Ablösung des durch den ersten Ansteuerimpuls (6) bewirkten Tintenvolumens von der Austrittsöffnung auftritt (Fig. 2).

FIG 2

EP 0 203 534 A1

## Tintenschreibeinrichtung zur Erzeugung von Tintentröpfchen unterschiedlicher Größe

Die Erfindung betrifft eine Tintenschreibeinrichtung zur Erzeugung von Tintentröpfchen unterschiedlicher Größe gemäß dem Oberbegriff des Patentanspruches 1.

Es ist bereits eine Tintenschreibeinrichtung bekannt, in der ein piezoelektrisch betriebener Schreibkopf verwendet wird, der mehrere Tintenkanäle enthält, denen jeweils ein piezoelektrisches Wandlerelement zugeordnet ist (DE-AS 25 43 451). Zur Einleitung des Ausstoßvorganges von Tintentröpfchen ist es bekannt, die Wandlerelemente durch Anlegen einer der Polarisationsrichtung der piezoelektrischen Wandlerelemente entgegengerichteten Spannung zu erweitern, diesen erweiterten Zustand eine definierte Zeit aufrecht zu erhalten und zum Ausstoß von Tintentröpfchen die Wandlerelemente in einen verengten Zustand zu bringen (DE-AS 25 48 691). Die auf diese Weise über die Austrittsöffnungen der Tintenkanäle ausgestoßenen Einzeltröpfchen treffen nach einer gewissen Flugzeit einen Aufzeichnungsträger und bilden dort rasterförmig angeordnet, mosaikartig einzelne Zeichen. Dabei ist es ein wesentliches Anliegen, daß die ausgestoßenen Tintentröpfchen jeweils gleiches Volumen besitzen.

Neuerdings tritt jedoch häufig die Forderung auf, mit Tintenschreibeinrichtungen Schriften verschiedener Schriftqualität, beispielsweise Schriften in einer sogenannten Entwurfsqualität und in einer sogenannten Schönschrift oder Near-Letter-Quality (NLQ) zu erzeugen.

Außerdem werden Tintenschreibeinrichtungen in zunehmenden Maße auch als Ausgabegeräte für Grafik eingesetzt, was erfordert, daß sogenannte Graustufen darstellbar sein müssen. Dabei kann in beiden Fällen eine einfarbige oder eine mehrfarbige Darstellung vorgesehen sein. Es ist für beide Einsatzmöglichkeiten notwendig, Tintentröpfchen unterschiedlicher Größe zu erzeugen. Hierzu ist bereits vorgeschlagen worden (P 34 15 778) die Tröpfchengröße dadurch zu variieren, daß die Antriebselemente mit unterschiedlichen einstellbaren Spannungen angesteuert werden. Der damit verbundene schaltungstechnische Aufwand ist jedoch nicht unerheblich. Weiterhin wird durch eine Veränderung der Steuerspannung auch das Verhalten der Schreibflüssigkeit innerhalb des Tintenkanals unterschiedlich beeinflußt, was sich, ohne zusätzlichen Aufwand störend auswirkt. Außerdem werden gemäß diesem Vorschlag stets zwei Einzeltröpfchen erzeugt, die in geringem gegenseitigen Abstand in Richtung auf den Aufzeichnungsträger fliegen und sich dort zu einem größeren Tropfen vereinigen. In Tintenschreibeinrichtungen der angegebenen Art sind die Tintentröpfchen jedoch gerade bei und nach ihrem Ausstoß in besonderem Ausmaß Störeinflüssen ausgesetzt. Selbst wenn die Tröpfchen in kurzen Zeitabständen aufeinanderfolgen, können diese unterschiedlichen Beeinflussungen ausgesetzt sein, was zu Abweichungen führt, die sich in einem deutlich verschlechterten Schriftbild äußert. Das gilt auch für eine andere bekannte Maßnahme (EP-A2-0 115 180), nach der ebenfalls zwei Einzeltröpfchen getrennt und nacheinander ausgestoßen werden, die sich entweder während ihrer Flugzeit oder nach dem Auftreffen auf dem Aufzeichnungsträger zu einem Tropfen vereinigen.

Der Erfindung liegt die Aufgabe zugrunde, eine für verschiedene Schriftqualitäten oder zur grafischen Darstellung mit Graustufen notwendige unterschiedliche Tröpfchengrößen in einer Weise zu erzeugen, die einen nur unerheblichen Steuerungsaufwand erfordert und bei der eine störende Beeinflussung im Tintenkanal des Schreibkopfes weitgehend vermieden wird.

Gelöst wird diese Aufgabe gemäß den kennzeichnenden Merkmalen des Patentanspruches 1. In weiteren Unteransprüchen sind Ausgestaltungen der Erfindung gekennzeichnet.

Mit der erfindungsgemäßen Lösung ist im wesentlichen der Vorteil verbunden, daß eine größere Vielfalt von unterschiedlichen Tröpfchengrößen erzeugt werden kann und daß die dazu erforderlichen Aufwendungen nicht besonders ins Gewicht fallen, wobei trotzdem die Schriftqualität der mit einer derartigen Tintenschreibeinrichtung dargestellten Zeichen oder Muster den gestellten Anforderungen voll auf genügt.

Die Erfindung wird im folgenden anhand der Zeichnungen erläutert. Dabei zeigen

Fig. 1 den Prinzipaufbau eines Tintenschreibkopfes,

Fig. 2 ein Impulsdiagramm zur Erläuterung der erfindungsgemäßen Ansteuerung für ein Ausführungsbeispiel und

Fig. 3 die einzelnen Phasen der Tröpfchenbildung nach der Erfindung.

Das in Fig. 1 dargestellte Beispiel für einen bekannten Druckkopf einer Tintenschreibeinrichtung weist mehrere Tintenkanäle 1 auf, denen jeweils ein piezoelektrisches Wandlerelement 2 in Form eines den Tintenkanal 1 über einen Teil seiner Länge umfassenden Röhrchens zugeordnet ist. Die dem Aufzeichnungsträger 3 zugewandten Enden der Tintenkanäle 1 stellen die Austrittsöffnungen 4 des Tintendruckkopfes dar, aus denen die einzelnen Tintentröpfchen ausgestoßen werden. Die Austrittsöffnungen 4 können durch eine hier nicht dargestellte Düsenplatte abgeschlossen sein. Am entgegengesetzten Ende stehen die Tintenkanäle 1 mit einer hier ebenfalls nicht dargestellten Tintenversorgung in Verbindung. Die Wandlerelemente 2 sind jeweils individuell über eine Ansteuerschaltung 5 ansteuerbar. Eine geeignete Ansteuerschaltung ist z.B. aus der DE-AS 25 48 691 bekannt. Ausgehend von einem Ruhezustand wird durch einen Ansteuerimpuls zunächst eine Erweiterung des Wandlerelementes 2, daraufhin eine Kontraktion und anschließend wieder der Ausgangszustand hergestellt. Die dadurch ausgelösten Druckimpulse führen dabei zum Ausstoß eines Einzeltröpfchens. Diese Vorgänge sind an sich bekannt.

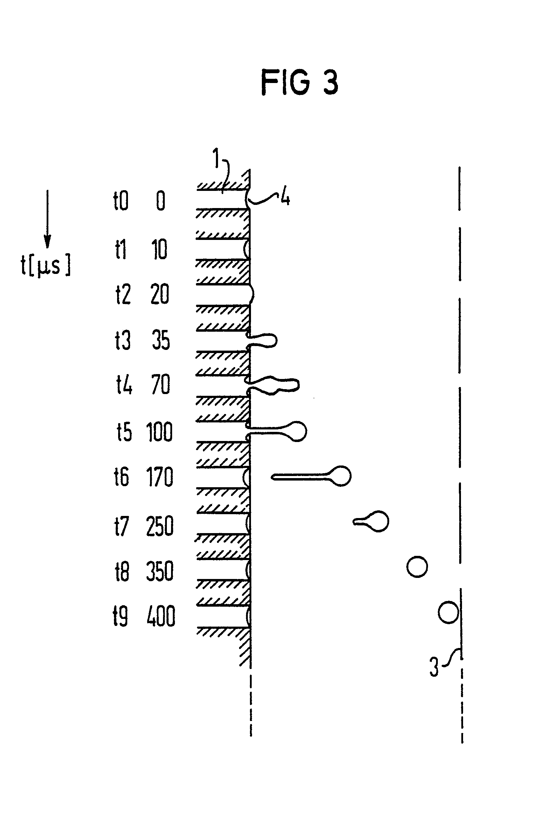

Zur Erläuterung der erfindungsgemäßen Lösung wird im folgenden auf Fig. 2 und 3 verwiesen.

Fig. 2 zeigt die Ansteuerung eines Wandlerelementes mit zwei Ansteuerimpulsen 6 und 7, die zeitlich dicht aufeinanderfolgen. In Zeile 1 sind die beiden Ansteuerimpulse 6 und 7 dargestellt, die in einem Abstand von $\Delta$ t, im Beispiel etwa 30 $\mu$s an das Wandlerelement gelegt werden, wobei es vorteilhaft ist, wenn der zweite Ansteuerimpuls 7 eine etwas größere Amplitude aufweist, als der erste Ansteuerimpuls 6. Diese kann in einfacher Weise durch die Länge des Ansteuerimpulses eingestellt werden. Beispielsweise kann der erste Ansteuerimpuls 6 eine Amplitude von U1 = 130 V, der zweite Ansteuerimpuls 7 eine Amplitude von U2 = 150 V betragen. Die Ansteuerimpulse 6 und 7 führen im betreffenden Tintenkanal zu Druckänderungen, wie sie in Form von Druckimpulsen in Fig. 2, Zeile 2 dargestellt sind. Entsprechend der Polarität der Ansteuerimpulse 6 und 7 und der Polarisationsrichtung des das Wandlerelement bildenden piezokeramischen Materials wird jeweils mit der Anschaltung eines Ansteuerimpulses 6, 7 zunächst eine Erweiterung und anschließend eine Kontraktion des Wandlerelements bewirkt. Anhand der Darstellung in Zeile 2 in Fig. 2 erkennt man, daß während der Anstiegsflanke tan 1 des ersten Ansteuerimpulses 6 ein negativer Druckimpuls 8, während dessen Abfallflanke ein positiver Druckimpuls 9 entsteht. Diesen Druckimpulsen folgt, ausgelöst durch den zweiten Ansteuerimpuls 7 mit dessen Anstiegsflanke tan 2 wiederum ein negativer und anschließend ein positiver Druckimpuls 10 und 11. Anschließend daran treten die üblichen Nachschwingvorgänge auf. Von diesen ist lediglich der folgende negative Druckimpuls mit 12 bezeichnet. Die nachfolgenden Nachschwingvorgänge sind nicht mehr im einzelnen bezeichnet worden.

Da die Ansteuerimpulse erfindungsgemäß zeitlich dicht aufeinander folgen, z.B. mit einem Abstand von etwa 30 $\mu$s an das Wandlerelement gelegt werden, erfolgt ein mit dem zweiten Ansteuerimpuls 7 bewirkter Ausstoß einer kleinen Tintenmenge noch bevor sich die durch den ersten Ansteuerimpuls 6 ausgestoßene Tintenmenge als Tröpfchen von der Austrittsöffnung des Tintenkanals abgelöst hat. Die beiden Tintenmengen bilden sehr schnell ein Tintentröpfchen, dessen Volumen gegenüber einem durch einen einzigen Ansteuerimpuls ausgestoßenen Tintentröpfchen größer ist.

Die Ausbildung eines Tintentröpfchens bei einer erfindungsgemäßen Ansteuerung mit mehreren zeitlich dicht aufeinanderfolgenden Ansteuerimpulsen wird im folgenden anhand von Fig. 3 am Beispiel eines zweifachen Ansteuerimpulses erläutert.

Fig. 3 zeigt die Austrittsöffnung 4 eines einzigen mit Tinte gefüllten Tintenkanals 1. Zum Zeitpunkt t0 befindet sich die Anordnung im Ruhezustand. Dieser ist dadurch gekennzeichnet, daß infolge des für Schreibköpfe der beschriebenen Art vorgesehenen geringen Unterdrucks der Meniskus der Tinte in der Austrittsöffnung 4 nach Innen gewölbt ist. Der mit den ersten Ansteuerimpuls (6 in Fig. 2) während dessen Anstiegsflanke ausgelöste negative Druckimpuls (8 in Fig. 2) führt zum Zeitpunkt t1, im Beispiel nach etwa 10 $\mu$s zu einer Verstärkung des negativen Meniskus. Bedingt durch den folgenden positiven Druckimpuls (9 in Fig. 2) bildet sich zum Zeitpunkt t2, im Beispiel nach etwa 20 $\mu$s, ein nach außen gewölbter Meniskus aus. Noch bevor die Ablösung eines ersten Tröpfchens erfolgt, tritt der zweite Ansteuerimpuls (7 in Fig. 2) auf. Die dadurch ausgelösten Druckimpulse (10, 11 in Fig. 2) führen zum Zeitpunkt t3 im Beispiel etwa nach 35 $\mu$s, zunächst zu einer Einschnürung und anschließend zum Ausstoß eines zweiten Tintenvolumens. Das zweite Tintenvolumen wird dabei sozusagen in das erste Tintenvolumen hineingeschossen. Zu den Zeitpunkt t4, t5 und t6 sind in der Praxis auftretende Zwischenstufen der Tröpfchenbildung dargestellt. Zum Zeitpunkt t5, im Beispiel nach etwa 100 $\mu$s, hat sich bereits ein zusammenhängendes längliches Tröpfchen gebildet, das an seinem schwanzartigen Ende durch einen negativen Druckimpuls (12 in Fig. 2) deutlich eingeschnürt wird, wodurch die Ablösung des gesamten Tintenvolumens beschleunigt wird. Zum Zeitpuntk t6, etwa nach 170 $\mu$s, hat sich im Tintenkanal wieder ein deutlich ausgeprägter negativer Meniskus ausgebildet und ein abgeschlossenes Tintenvolumen hat die Austrittsöffnung 4 verlassen. Das ausgestoßene Tintenvolumen nimmt, wie die Darstellung zu den Zeitpunkten t7, t8 und t9 zeigt rasch eine kugelförmige Form an. Das zum Zeitpunkt t9 auf dem Aufzeichnungsträger 3 auftreffende Tintentröpfchen hat gegenüber einem durch einen einzigen Ansteuerimpuls ausgelösten Tintentröpfchen ein größeres Tintenvolumen, führt also zu einem Bildpunkt größeren Durchmessers.

Um sicherzustellen, daß sowohl kleine Tröpfchen als auch größere Tröpfchen jeweils die gleiche Position auf dem Aufzeichnungsträger einnehmen, ist die Form und die Folgefrequenz der Ansteuerimpulse so zu wählen, daß für kleine und für größere Tintentröpfchen jeweils der gleiche Wert für die Flugzeit eingehalten wird. Das wird z.B. dadurch erreicht, daß für den Fall von mehreren Ansteuerimpulsen die Impulslänge und damit die Amplitude des jeweils ersten Ansteuerimpulses kleiner ist als die Impulslänge und damit die Amplitude der jeweils folgenden Ansteuerimpulse. Für die Wahl des zeitlichen Abstandes (Folgefrequenz) bei einer Ansteuerung mit aufeinanderfolgenden Ansteuerimpulsen ist es vorteilhaft, diese auf die Resonanzfrequenz des Tintenkanals abzustimmen. Für ein praktisches Beispiel sind folgende Werte vorteilhaft, wobei die Impulslänge durch die Werte der Anstiegszeit tan der Ansteuerimpulse definiert ist.

Ansteuerung mit einem einzigen Ansteuerimpuls: Anstiegszeit t an = 15,2 $\mu$s , Amplitude U = 150 V;

Ansteuerung mit zwei Ansteuerimpulsen:

Abstand der beiden Impulse $\Delta$ t = 32 $\mu$s, Anstiegszeit des ersten Ansteuerimpulses t an1 = 13 $\mu$s, Amplitude U1 = 130 V, Anstiegszeit des zweiten Ansteuerimpulses t an2 = 15 $\mu$s, Amplitude U2 = 150 V.

Die Erfindung wurde anhand eines Beispieles erläutert, bei dem zum Ausstoß eines Tintentröpfchens größeren Volumens eine Ansteuerung mit zwei aufeinanderfolgenden Ansteuerimpulsen erfolgt. Es liegt im Rahmen der Erfindung, auch mehr als zwei aufeinanderfolgende Ansteuerimpulse zu verwenden. Damit ist dann eine entsprechend größere Anzahl unterschiedlicher Tröpfchengrößen möglich. Für den Fall einer Ansteuerung mit drei Ansteuerimpulsen ergeben sich für ein praktisches Beispiel mit Vorteil folgende

Werte:

Abstand der aufeinanderfolgenden Impulse $\Delta$ t = 32 $\mu$s;

Anstiegszeit des ersten Ansteuerimpulses t an1 = 13 $\mu$s, Amplitude U1 = 130 V, Anstiegszeit des zweiten Ansteuerimpulses t an2 = 15 $\mu$s, Amplitude U2 = 150 V;

Anstiegszeit des dritten Ansteuerimpulses t an3 = 15 $\mu$s, Amplitude U = 150 V.

**Ansprüche**

1. Tintenschreibeinrichtung mit einem Druckkopf, dessen mit den Austrittsöffnungen auf einen Aufzeichnungsträger gerichteten Tintenkanälen jeweils ein piezoelektrisches Wandlerelement zugeordnet ist, das bei Ansteuerung mittels Ansteuerimpulsen Druckimpulse im Tintenkanal erzeugt, die zu einem tröpfchenweisen Ausstoß von Tinte führen,

**dadurch gekennzeichnet,** daß zum Ausstoß von Tintentröpfchen unterschiedlicher Größe die Wandlerelemente (2) mit einer einstellbaren Anzahl von Ansteuerimpulsen (6, 7) ansteuerbar sind, die zeitlich derart aufeinanderfolgend einem Wandlerelement (2) zugeführt werden, daß die durch, einem ersten Ansteuerimpuls (6) folgende Ansteuerimpulse (7) ausgelösten Druckimpulse (8, 9, 10, 11, 12) noch vor der Ablösung des durch den mit dem ersten Ansteuerimpuls (6) ausgelösten Druckimpulses (8, 9) gebildeten Tröpfchens auftreten.

2. Tintenschreibeinrichtung nach Anspruch 1,

**dadurch gekennzeichnet,** daß die einem ersten Ansteuerimpuls (6) folgenden weiteren Ansteuerimpulse (7) eine gegenüber dem ersten Ansteuerimpuls (6) größeren Impulslänge (t an2 > t an1) und größere Amplitude (U2 > U1) aufweisen.

3. Tintenschreibeinrichtung nach Anspruch 1 und 2,

**dadurch gekennzeichnet,** daß die Folgefrequenz aufeinanderfolgender Ansteuerimpulse (6, 7) auf die Resonanzfrequenz des Tintenkanals (1) abgestimmt ist.

FIG 1

FIG 2

# FIG 3

| | |
|---|---|
| t0 | 0 |
| t1 | 10 |
| t2 | 20 |
| t3 | 35 |
| t4 | 70 |
| t5 | 100 |
| t6 | 170 |
| t7 | 250 |
| t8 | 350 |
| t9 | 400 |

$t[\mu s]$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | PATENTS ABSTRACTS OF JAPAN, Band 9, Nr. 34 (M-357)[1757], 14. Februar 1985; & JP - A - 59 176 055 (KONISHIROKU SHASHIN KOGYO K.K.) 05.10.1984 * Zusammenfassung * | 1 | B 41 J 3/04 H 04 N 1/40 |
| A | idem | 2 | |
| | --- | | |
| Y | PATENTS ABSTRACTS OF JAPAN, Band 8, Nr. 274 (M-345)[1711], 14. Dezember 1984; & JP - A - 59 143 652 (KONISHIROKU SHASHIN KOGYO K.K.) 17.08.84 * Zusammenfassung * | 1 | |
| | --- | | |
| A | US-A-4 499 479 (F. CHEE-SHUEN LEE) | | |
| | ----- | | |

RECHERCHIERTE SACHGEBIETE (Int. Cl.4)

B 41 J
H 04 N

Der vorliegende Recherchenbericht wurde für alle Patentansprüche erstellt.

| Recherchenort | Abschlußdatum der Recherche | Prüfer |
|---|---|---|
| DEN HAAG | 27-08-1986 | VAN DEN MEERSCHAUT G |